# EUROPEAN PATENT APPLICATION

(11) **EP 1 568 263 A1**
(43) Date of publication of application: **31.08.2005**
(21) Application number: 04075700.7
(22) Date of filing: 27.02.2004
(51) Int. Cl.: A01B 1/12, A01D 1/00

(54) **Weed eliminating or sod cutting tool**

(71) Applicant: van Dulmen, A. A., Dr., 1871 CZ Schoorl (NL)
(72) Inventor: The designation of the inventor has not yet been filed

(57) **Abstract**

The invention relates to a weed eliminating or sod cutting tool, comprising a blade (2) with a cutting portion (3), wherein said cutting portion (3) is provided with a plurality of slicing V-type notches (4) sharpened on all sides. The invention can be used for a gardening tool and for a tool for mechanically eliminating weeds.

## Description

The present invention relates to a weed eliminating or sod cutting implement comprising (a) a blade with a cutting portion having a sharp cutting edge and (b) a gripping portion. Such a well-known implement can be used as a gardening tool, in particular a hoe, after a handle, often a stick-type handle, has been attached to the gripping portion of said implement.

The cutting ability of the conventional weeding tools or hoes, however, leaves to be desired, especially if larger weeds are to be removed. Upon gardening with a conventional hoe, a gardener often needs to exert much energy to achieve only poor weeding results.

The present invention has for its objective to provide a weed eliminating or sod cutting implement, as defined above, having an improved cutting ability. To this end the cutting portion of the blade of said implement is, according to the present invention, provided with a plurality of slicing V-type notches sharpenened on all sides.
The tool's blade is made from a non-deformable rigid material, preferably from steel. The gripping portion is equally manufactured from a non-deformable material, e.g. from steel - preferably integrated with the blade -, or from a suitable rigid synthetic material.
It should be noted, that the modification of the cutting portion of the blade, according to the present invention, is not restricted to weeding tools or hoes, but encompasses also sod cutting implements, in particular tools for trimming lawn edges and for digging through grass sods.

If used as a weed eliminating implement, the implement of the present invention is preferably produced in such manner, that its blade's side proximate to the gripping portion also has a sharpened edge. In this preferred embodiment the weeding ability of the tool is even improved.

The number of notches provided in the blade of the weed eliminating or sod cutting implement of the invention is not critical and depends on the width of the blade and on the intended application of the tool. For most applications the blade is provided with 4 to approx. 30 V-type notches, preferably approx. 10 to approx. 20 notches.

The invention further relates to a gardening tool, comprising an implement as defined above, to which a handle, often a stick-type handle, has been attached, wherein the gripping portion of the implement comprises means for a detachable or undetachable connection with said handle.
The handle may be made from wood and then generally consists of a wooden stick, if desired provided with a small cross-lath; a wooden stick-type handle can conveniently be used for an undetachable connection to the gripping portion of the tool, e.g. by means of a conventional screw-hole attachment (see the accompanying Example). Alternatively the handle may be manufactured from a non-deformable rigid synthetic material and is then additionally suitable for a detachable connection to the gripping portion of the implement, e.g. by a conventional click connection: upon attachment, a spring catch locks in a hole to connect implement to handle.

The above gardening tool may be produced as a push hoe or as a pull hoe. In the former construction the weeding blade is in an upward bent position relating to the gripping portion, affording an angle of approx. 45° between handle and blade. In the latter construction the weeding blade is in a downward and backward bent position relating to the gripping portion, affording an angle of approx. 135° between handle and blade. In case the gardening tool is intended for trimming lawn edges, for digging through long grass or for related applications, the implement has been attached to the stick-type handle in such manner that the implement's gripping portion is approximately in line with the handle.

From environmental reasons (to avoid soil and air pollution), mechanical weeding is more and more preferred to chemical weed killing in horticulture and in agriculture.
The present invention also relates to a tool for mechanically eliminating weeds in a field with lined-up agricultural and horticultural crops or plants, comprising a plurality of implements, as described above for the pull hoe, in mutually parallel position, wherein the gripping portion of each of said implements has been attached in a tight manner, if desired through an elongating member, to means that can be pulled along the field. Examples of suitable agricultural crops that can be weeded mechanically by the tool of the present invention are e.g. corn, potatoes and sugar beets. Suitable examples of horticultural crops are bulbous plants in bulb fields, and ornamental plants and shrubs, particularly in the cultivation of plants and flowers.
The weeding implements, in a mutually distanced position in accordance with the mutual distances of the lined-up crops or plants, are attached to a rigid means, if desired through elongated members, e.g. tubes or bars. Said rigid means may conveniently constitute a frame, which should provide a solid attachment of the weeding implements and guarantee that these implements remain in a proper weeding position to the soil's surface during use of the tool. If necessary, said frame may be incorporated in a two-wheeled cart. Upon use, the tool for mechanically eliminating weeds is pulled along the field, e.g. by means of a tractor.

### Example

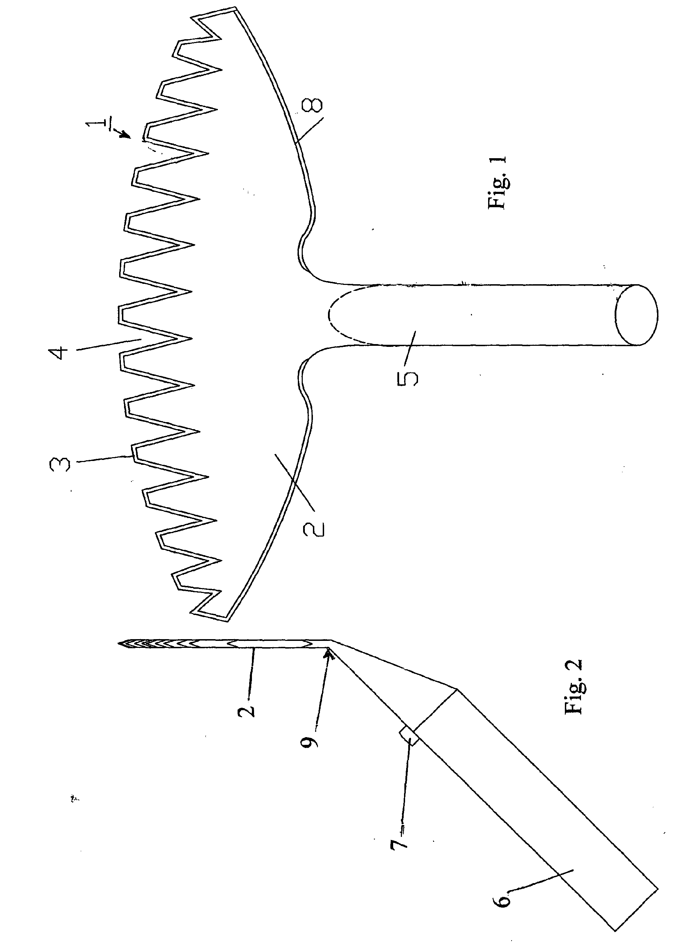

The invention will now be described in greater detail with reference to the accompanying drawing, wherein the Figures are representations of the gardening tool according to the present invention in a suitable embodiment, viewed from above (Fig. 1) and in side view (Fig. 2).

The Figures show a push hoe 1, comprising a weeding blade 2 with a sharpened cutting edge 3 and with a plurality of slicing V-type notches 4 sharpened on all sides. The tool further comprises a gripping portion in the form of a tubular member 5 open at one end, into which a stick-type handle 6, made from wood or from a non-deformable material, has been attached by means of a screw-hole combination 7. The blade's side proximate to the gripping portion also has a sharpened edge 8. The gripping portion is in a slightly upward bent position (at 9) relating to the weeding blade, so that an angle of approx. 45° is constituted between handle 6 and weeding blade 2.
The use of specimens of the above hoes in gardening has shown, that these hoes have a clear advantage in weeding, especially when dealing with large weeds. Apparently the teeth of the hoes hook into the roots of the weeds and cut them or pull them out, resulting in an improved weeding efficiency by the exertion of less energy.

## Claims

1. A weed eliminating or sod cutting implement having an improved cutting ability, comprising (a) a blade with a cutting portion having a sharp cutting edge and (b) a gripping portion, **characterized in that** the cutting portion of said blade is provided with a plurality of slicing V-type notches sharpened on all sides.

2. Implement as claimed in claim 1, wherein the blade's side proximate to the gripping portion also has a sharpened edge.

3. Implement as claimed in claim 1 or 2, wherein said blade is provided with 4 to approx. 30 V-type notches, preferably approx. 10 to approx. 20 notches.

4. A gardening tool, comprising an implement as claimed in any of claims 1-3, to which a handle has been attached, wherein the gripping portion of the implement comprises means for a detachable or undetachable connection with said handle.

5. A gardening tool as claimed in claim 4, to be used as a push hoe, wherein the blade of the implement is in an upward bent position relating to the gripping portion, affording an angle of approx. 45° between handle and blade.

6. A gardening tool as claimed in claim 4 to be used as a pull hoe, wherein the blade of the implement is in a downward and backward bent position relating to the gripping portion, affording an angle of approx. 135° between handle and blade.

7. A gardening tool as claimed in claim 4, to be used as a sod cutting tool, wherein the implement has been attached to the handle in such a manner that the implement's gripping portion is approximately in line with said handle.

8. A tool for mechanically eliminating weeds in a field with lined-up agricultural and horticultural crops or plants, comprising a plurality of implements, as defined in claim 6, in mutually parallel position, wherein the gripping portion of each of said implements has been attached in a tight manner, if desired through an elongating member, to means that can be pulled along the field.
